(19) Europäisches Patentamt European Patent Office Office européen des brevets

(11) **EP 1 906 468 A1**

(12) **EUROPEAN PATENT APPLICATION**
published in accordance with Art. 153(4) EPC

(43) Date of publication:
**02.04.2008 Bulletin 2008/14**

(51) Int Cl.:
***H01M 2/02*** (2006.01)

(21) Application number: **06767808.6**

(22) Date of filing: **04.07.2006**

(86) International application number:
**PCT/JP2006/313277**

(87) International publication number:
**WO 2007/010741 (25.01.2007 Gazette 2007/04)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.07.2005 JP 2005211362**

(71) Applicant: **MATSUSHITA ELECTRIC INDUSTRIAL CO., LTD.**
**Osaka 571-8501 (JP)**

(72) Inventors:
• **SAKASHITA, Fumiharu**
c/o Matsushita Electric Industrial Co., Ltd.
2-1-61 Shiromi, Chuo-ku,
Osaka 540-6207 (JP)
• **HANO, Masatoshi**
c/o Matsushita Electric Industrial Co., Ltd.
2-1-61 Shiromi, Chuo-ku,
Osaka 540-6207 (JP)

• **MORI, Katsuhiko**
c/o Matsushita Electric Industrial Co., Ltd.
2-1-61 Shiromi, Chuo-ku,
Osaka 540-6207 (JP)
• **TOKUMOTO, Tadahiro**
c/o Matsushita Electric Industrial Co., Ltd.
2-1-61 Shiromi, Chuo-ku,
Osaka 540-6207 (JP)
• **ADACHI, Mitsuji**
c/o Matsushita Electric Industrial Co., Ltd.
2-1-61 Shiromi, Chuo-ku,
Osaka 540-6207 (JP)

(74) Representative: **TBK-Patent**
**Bavariaring 4-6**
**80336 München (DE)**

(54) **BATTERY CAN AND METHOD OF MANUFACTURING THE SAME**

(57) To provide a battery can into which an electrode assembly can be housed smoothly without causing damage to the electrode assembly while ensuring the strength of the opening portion. In the battery can including a cylindrical side portion, a bottom, and an opening portion, the cylindrical side portion includes a first side portion formed at the bottom side, and a second side portion formed at the opening portion side. The thickness $T_1$ of the first side portion and the thickness $T_2$ of the second side portion are adjusted to satisfy a relational expression: $T_1 < T_2$, and the inner diameter of the cylindrical side portion is constant from the opening portion side to the bottom side.

F I G. 1

**Description**

Technical Field

The present invention relates to a battery can for use as an outer casing for an alkaline dry battery, nickel-metal hydride storage battery, or non-aqueous electrolyte secondary battery as typified by lithium ion battery, and to a method for manufacturing the same.

Background Art

Along with the development of portable devices in recent years, the number of batteries used as power sources for those devices keeps increasing. Therefore, demand is growing in the market to reduce product price for both secondary batteries and primary batteries.

As a production method that improves the productivity of battery cans for use as outer casings of batteries and reduces the production cost of battery cans, DI process (Drawing and Ironing) is proposed. According to DI process, a plurality of dies having different drawing/ironing diameters are disposed such that the drawing/ironing diameters are progressively smaller, and a base can comprising a bottomed cylindrical body formed of a steel material whose surface is plated with nickel is passed successively through the plurality of dies while a pressure is applied thereto by a molding punch. Thereby, the base can is drawn and ironed. This drawing and ironing process produces a battery can having a predetermined shape.

In order to ensure the strength of the opening portion end that serves as a sealing portion and to obtain a battery can having a large internal volume, a thick portion is formed at the opening portion side of the battery can, and a thin portion is formed at the bottom side.

In order to obtain the above-described shape, a molding punch used in a conventional process has a can forming portion formed at the front for inserting into a base can and a rear end portion formed at the rear of the can forming portion and having a diameter smaller than that of the can forming portion. Accordingly, the cylindrical side portion of a battery can obtained by this process has a thin portion formed at the bottom side and a thick portion formed at the opening portion side (see, for Example, Patent Documents 1 and 2).

Patent Document 1: Japanese Laid-Open Patent Publication No. Hei 5-89861
Patent Document 2: Japanese Laid-Open Patent Publication No. 2004-241186

Disclosure of the Invention

Problem To be Solved by the Invention

However, the thick portion formed in a battery can produced by the above-described process is formed such that the outer diameter of the cylindrical side portion of the battery can is constant from the opening portion end side to the bottom side. As a result, the inner diameter of the cylindrical side portion of the battery can produced by the above-described process is smaller toward the opening portion end side. On the other hand, the inner diameter at the bottom of side of the battery can that houses an electrode assembly is larger than that at the opening portion end side.

Because conventional battery cans have the shape as described above, there exists the problem that, when an electrode assembly is housed into a battery can, the electrode assembly comes into contact with the opening portion of the battery can, and is therefore likely to suffer damage.

In view of the above, in order to solve the above problem, an object of the present invention is to provide a battery can into which an electrode assembly can be housed smoothly without causing damage to the electrode assembly when the electrode assembly is housed into the battery can, while ensuring the volume of the battery can that houses the electrode assembly as well as the strength of the opening portion. Another object of the present invention is to provide a method for manufacturing a battery can that can provide the above-described battery can in an easy and ensured manner.

Means for Solving the Problem

The present invention relates to a battery can comprising a cylindrical side portion, a bottom and an opening portion, wherein the cylindrical side portion comprises a first side portion formed toward the side of the bottom and a second side portion formed toward the side of the opening portion, the thickness $T_1$ of the first side portion and the thickness $T_2$ of the second side portion satisfy a relational expression (1): $T_1 < T_2$, and the inner diameter of the cylindrical side portion is constant from the opening portion side to the bottom side.

The battery can has a shape that the inner diameter of the cylindrical side portion is constant from the opening portion side to the bottom side as described above, and therefore it is possible to obtain a battery can into which an electrode assembly can be housed smoothly without causing damage to the electrode assembly when the electrode assembly is housed into the battery can, while ensuring the volume of the battery can that houses the electrode assembly as well as the strength of the opening portion.

In the above-described battery can, it is preferable that the cylindrical side portion further comprises a junction provided between the first side portion and the second side portion and having a thickness that increases gradually from the side of the first side portion to the side of the second side portion, and the length $L_1$ of the junction that extends from the first side portion side to the second side portion side, the thickness $T_1$ of the first side portion, and the thickness $T_2$ of the second side portion satisfy a relational expression (2): $50 \leqq \{L_1/(T_2-T_1)\} \leqq 100$.

The present invention further relates to a method for manufacturing a battery can comprising the steps of: (1) subjecting a base can comprising a bottomed cylindrical body to a drawing and ironing process in which the base can is passed successively through a plurality of molding dies with a pressure applied by a molding punch, so as to obtain an intermediate product comprising a cylindrical side portion, a bottom and an opening portion, wherein the cylindrical side portion comprises a first side portion formed toward the side of the bottom and a second side portion formed toward the side of the opening portion, the thickness $T_1$ of the first side portion and the thickness $T_2$ of the second side portion satisfy a relational expression (1): $T_1 < T_2$, and the outer diameter of the cylindrical side portion is constant from the opening portion side to the bottom side; and (2) after the step (1), inserting an expanding punch, which comprises an inserting portion having a diameter equal to the inner diameter of the second side portion, and a convex portion formed at the rear of the inserting portion and having a diameter equal to the inner diameter of the first side portion, into the opening portion of the intermediate product from the side of the inserting portion, in order that the second side portion is pressed from the inside toward the outside by the convex portion so as to obtain a battery can processed such that the inner diameter of the cylindrical side portion is constant from the opening portion side to the bottom side.

In the above-described step, it is preferable that the length $L_2$ of the convex portion of the expanding punch in the length direction of the base can and the length $L_3$ of the second side portion in the length direction of the base can satisfy a relational expression (3): $0.05 \leqq (L_3/L_2) \leqq 0.4$.

Effect of the Invention

According to the present invention, it is possible to provide a battery can for use as an outer casing for a non-aqueous electrolyte secondary battery or the like, into which an electrode assembly can be housed smoothly without causing damage to the electrode assembly while ensuring the strength at the opening portion side.

With the use of the battery can obtained according to the present invention, it is possible to obtain a highly reliable high capacity battery.

Brief Description of the Drawings

FIG. 1 is a vertical cross sectional view of a bottomed cylindrical battery can according to an embodiment of the present invention.

FIG. 2 is a vertical cross sectional view showing DI process in a method for manufacturing a battery can of the present invention.

FIG. 3 is a vertical cross sectional view showing a state in which an intermediate product is obtained by DI process in a method for manufacturing a battery can of the present invention.

FIG. 4 is a vertical cross sectional view showing a step of inserting an expanding punch into an intermediate product of a method for manufacturing a battery can of the present invention.

FIG. 5 is a vertical cross sectional view showing a state in which a battery can is obtained by inserting an expanding punch according to a method for manufacturing a battery can of the present invention.

FIG. 6 is a vertical cross sectional view of a lithium ion secondary battery obtained using a battery can of the present invention.

Best Mode for Carrying Out the Invention

Hereinafter, a preferred embodiment of the present invention will be described with reference to the drawings. However, it is to be understood that the present invention is not limited thereto.

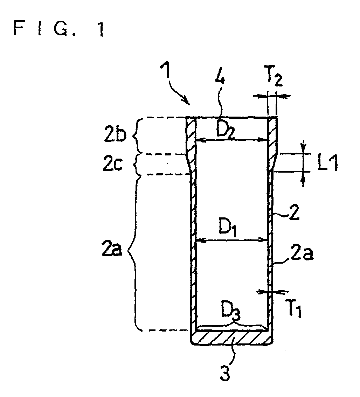

FIG. 1 is a vertical cross sectional view of a bottomed cylindrical battery can according to an embodiment of the present invention.

A bottomed cylindrical battery can 1 includes a cylindrical side portion 2, a bottom 3 and an opening portion 4. The cylindrical side portion 2 includes a first side portion 2a formed at the side of the bottom 3, a second side portion 2b formed at the side of the opening portion 4, and a junction 2c formed between the first side portion 2a and the second side portion 2b and having a thickness that increases gradually from the side of the first side portion 2a to the side of the second side portion 2b, wherein the thickness $T_1$ of the first side portion 2a and the thickness $T_2$ of the second side portion 2b satisfy a relational expression (1):

$$T_1 < T_2.$$

The inner diameter of the cylindrical side portion 2 is constant from the side of the bottom 3 to the side of the opening portion 4 (in other words, a shape in which the inner diameter $D_1$ of the first side portion 2a and the inner diameter $D_2$ of the second side portion 2b of the battery can of FIG. 1 satisfy a relational expression: $D_1 = D_2$). For this reason, the battery can 1 that the present invention affords ensures the strength of the opening portion 4 of the battery can 1, and at the same time, in the production process of the battery, an electrode assembly including a positive electrode, a negative electrode and a separator can be housed smoothly into the battery can 1 without causing damage to the electrode assembly due to the contact of the electrode assembly with the opening portion 4.

It is preferable that the length $L_1$ of the junction 2c extending from the side of the first side portion 2a to the side of the second side portion 2b, the thickness $T_1$ of the first side portion 2a, and the thickness $T_2$ of the second side portion 2b satisfy a relational expression (2):

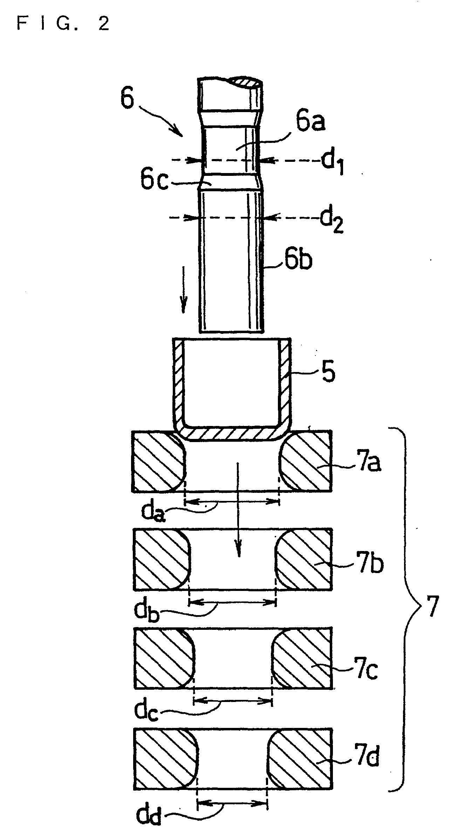

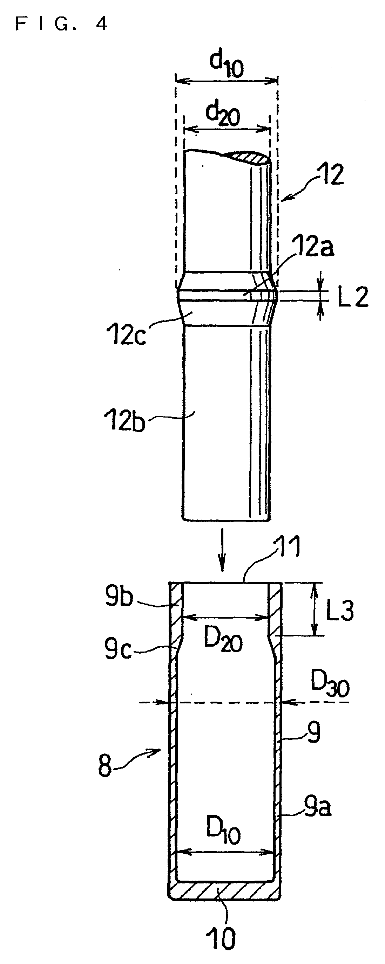

$50 \leqq \{L_1/(T_2-T_1)\} \leqq 100$. The length $L_1$ can be controlled by, for Example, adjusting the dimension of a tapered portion 6c of a molding punch 6 shown in FIG. 2, the dimension of a tapered portion 12c of an expanding punch 12 shown in FIG. 4, and the like.

In the battery can 1 to be produced, by setting the value obtained from $\{L_1/(T_2-T_1)\}$ given above to 50 or greater, in the groove forming process in which an annular groove is formed in the junction 2c, it is possible to suppress a stress that occurs between the first side portion 2a and the second side portion 2b, which allows easy formation of the annular groove. Conversely, by setting the value obtained from $\{L_1/(T_2-T_1)\}$ given above to 100 or less, it is possible to suppress the pressure applied to the electrode assembly by the junction 2c that extends to the housing portion for the electrode assembly during the groove forming process, preventing damage to the electrode assembly.

When sealing the opening portion with a sealing member after the electrode assembly is housed into the battery can 1, the groove forming process is performed to form an annular groove in the junction 2c located between the first side portion 2a and the second side portion 2b of the cylindrical side portion 2 of the battery can 1. Then, the opening portion of the battery is sealed by crimping the upper portion of the annular groove in the battery can onto the sealing member with an insulating gasket interposed therebetween.

As an embodiment of a method for manufacturing a battery can of the present invention, the method for manufacturing the bottomed cylindrical battery can 1 will be described below.

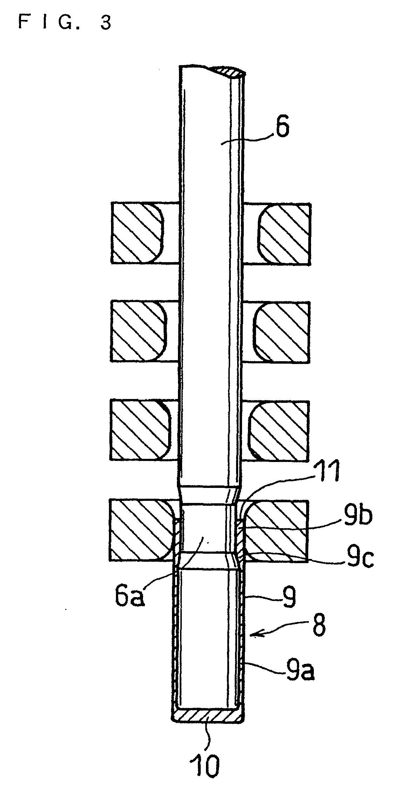

A description will be given of a step (1) with reference to FIGS. 2 and 3.

Step (1): Using molding dies 7 and a molding punch 6, a base can 5 comprising a bottomed cylindrical body is processed into a bottomed cylindrical intermediate product 8 shown in FIG. 3. The molding dies 7 include a drawing die 7a, and three ironing dies 7b to 7d arranged at the rear of the drawing die 7a. The base can 5 is passed successively through the dies 7a to 7d with a pressure applied by the molding punch 6, whereby the base can 5 is subjected successively to one drawing process and three ironing process (DI process). The dies 7a to 7d are arranged such that the inner diameters $d_a$ to $d_d$ of the dies 7a to 7d are progressively smaller in the order of $d_a$ to $d_d$.

The molding punch 6 used in the above-described step (1) has a can forming portion 6b, a rear end portion 6a and a tapered portion 6c. The can forming portion 6b is formed toward the side where the base can 5 is inserted, and serves to form a bottom 10 and a first side portion 9a of a cylindrical side portion 9. The rear end portion 6a is formed at the rear of the can forming portion 6b, and serves to form a second side portion 9b. The tapered portion 6c is formed between the can forming portion 6b and the rear end portion 6a. The diameter of the tapered portion 6c increases gradually from the side of the rear end portion 6a to the side of the can forming portion 6b. Further, the diameter $d_1$ of the rear end portion 6a and the diameter $d_2$ of the can forming portion 6b satisfy a relational expression: $d_1 < d_2$.

The base can 5 comprising a bottomed cylindrical body is obtained by, for Example, feeding a nickel plated steel sheet in which one or both sides are plated with nickel to a pressing machine where the steel sheet is punched into a predetermined shape, followed by a drawing process. As the material of the base can 1, it is also possible to use, for Example, cold rolled steel composed mainly of iron, or the like.

The intermediate product 8 obtained in the above-described step (1) has a cylindrical side portion 9, a bottom 10 and an opening portion 11. The cylindrical side portion 9 has a first side portion 9a formed at the side of the bottom 10, a second side portion 9b formed at the side of the opening portion 11, and a junction 9c formed between the first side portion 9a and the second side portion 9b and having a thickness that increases gradually from the side of the first side portion 9a to the side of the second side portion 9b.

In the intermediate product 8 described above, as shown in FIG. 4, the inner diameter $D_{10}$ of the first side portion 9a and the inner diameter $D_{20}$ of the second side portion 9b satisfy a relational expression: $D_{10} > D_{20}$, and the outer diameter $D_{30}$ of the cylindrical side portion 9 is constant from the side of the opening portion 11 to the side of the bottom 10.

According to a conventional technique, the intermediate product 8 described above is used as a battery can, and thus the problem occurs that, when an electrode assembly is housed thereinto, the electrode assembly is pressed by the second side portion 9b, and is therefore likely to suffer damage. In order to overcome this problem, the method for manufacturing a battery can of the present invention is characterized by performing a step (2), which will be described below, after the step (1) described above.

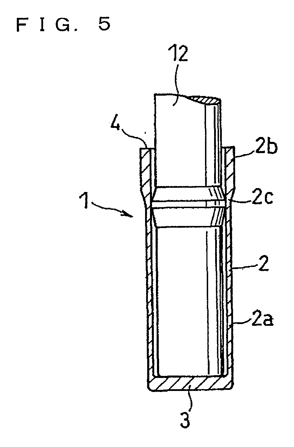

The step (2) will be described below with reference to FIGS. 4 and 5.

Step (2): Using an expanding punch 12, the intermediate product 8 is processed into a bottomed cylindrical battery can 1. The expanding punch 12 has an inserting portion 12b having a diameter $d_{20}$ equal to the inner diameter $D_{20}$ of the second side portion 9b of the intermediate product 8, a convex portion 12a formed at the rear of the inserting portion 12b and having a diameter $d_{10}$ equal to the inner diameter $D_{10}$ of the first side portion 9a of the intermediate product 8. Accordingly, the diameter $d_{10}$ of the convex portion 12a and the diameter $d_{20}$ of the inserting portion satisfy a relational expression: $d_{10} > d_{20}$. A tapered portion 12c is formed between the inserting portion 12b and the convex portion 12a. The formation of the tapered portion 12c in the expanding punch 12 enables the convex portion 12a to be inserted smoothly into the intermediate product 8.

The expanding punch 12 is inserted into the opening portion 11 of the intermediate product 8 from the side of the inserting portion 12b. In the inserting process, the second side portion 9a and the junction 9c of the intermediate product 8 are pressed from the inside toward the outside by the convex portion 12a. As a result, a battery can 1 having a cylindrical side portion 2 whose inner diameter is constant from the side of the opening portion 4 to the side of the bottom 3 (that is, $D_1 = D_2$) as shown in FIG. 1 is obtained. At this time, because the diameter of the inserting portion 12b is smaller than that of the first side portion 9a, the first side portion 2a and the bottom 3 of the battery can 1 have the same size as the first side portion 9a and the bottom 10 of the intermediate product 8.

As shown in FIG. 4, it is preferable that the length $L_2$ of the convex portion 12a of the expanding punch 12 and the length $L_3$ of the second side portion 9b satisfy a relational expression (3): $0.05 \leqq (L_3/L_2) \leqq 0.4$. By setting the value of $(L_3/L_2)$ to 0.05 or greater, it is possible to suppress a restoring force caused by the springback of the second side portion 9b after the insertion of the expanding punch 12, whereby the inner diameter of the cylindrical side portion 9 can be easily made constant from the side of the opening portion 11 to the side of the bottom 10. Conversely, by setting the value of $(L_3/L_2)$ to 0.4 or less, the resistance force between the convex portion 12a of the expanding punch 12 and the cylindrical side portion 9 can be suppressed, which suppresses an increase in the diameter at the bottom 10 side of the battery can 1 caused by buckling that occurs at the bottom 10 side of the cylindrical side portion 9.

According to the method for manufacturing a battery can of the present invention as described above, it is possible to process a battery can having a cylindrical side portion whose outer diameter is constant from the opening portion side to the bottom side into a battery can having a cylindrical side portion whose inner diameter is constant from the opening portion side to the bottom side in an easy and ensured manner. In this battery can, the thickness $T_1$ of the first side portion and the thickness $T_2$ of the second side portion satisfy a relational expression (1): $T_1 < T_2$, and therefore the strength of the opening portion of the battery can is retained. Furthermore, because the inner diameter of the cylindrical side portion is constant from the opening portion side to the bottom side, it is possible to insert an electrode assembly smoothly into the battery can without causing damage to the electrode assembly.

Although the embodiment described above describes the case where the cylindrical side portion of the battery can is circular in transverse cross section, the transverse cross section may be a rectangle with rounded angles, ellipse, polygon, or the like. In this case, by using a base can suitable for a desired shape of transverse cross section, a molding punch and an expanding punch in the step of processing a battery can, the present invention can be preferably carried out. In addition, the bottom of the battery can may be flat, or may have a protrusion that serves as the terminal for either one of the positive and negative electrodes.

The battery can of the present invention can be suitably used to house a conventionally-used electrode assembly to produce a battery such as alkaline dry battery, nickel-metal hydride storage battery, or non-aqueous electrolyte secondary battery as typified by lithium ion battery.

Examples

Hereinafter, the Examples of the present invention and a Comparative Example will be described. It is to be understood that the content of the present invention is not limited to the Examples given below.

«Example 1»

A battery can of the present invention was produced by the method for manufacturing a battery can of the present invention described in the above embodiment. Specifically, a battery can of the present invention was produced by the following method.

A steel sheet plated with Ni was punched out into a circular shape, which was then subjected to a drawing process with the side plated with Ni serving as the inner side so as to obtain a base can comprising a bottomed cylindrical body. The obtained base can comprising a bottomed cylindrical body was subsequently subjected to DI process (Step (1)) using molding dies and a molding punch configured as shown in FIG. 2 to mold the base can into a cylindrical shape. In this manner, an intermediate product 8 configured as shown in FIG. 4 was obtained.

Subsequently, an expanding punch 12 configured as shown in FIG. 4 was inserted into the intermediate product 8 obtained above to form a cylindrical side portion 2 whose inner diameter was constant (that is, $D_1 = D_2$) from the side of the opening portion 4 to the side of the bottom 3. Thereby, a battery can 1 of the present invention configured as shown in FIG. 1 was produced (Step (2)).

The convex portion of the expanding punch 12 used in the step (2) had a length $L_2$ of 1.0 mm.

The battery can 1 obtained in the above-described manner had a cylindrical shape with an outer diameter of 18 mm and a height of 65 mm. The inner diameter of the cylindrical side portion 2 (the first side portion 2a, the second side portion 2b and the junction 2c) was 17.76 mm. The thickness of the bottom 3 of the battery can 1 was about 0.3 mm. The thickness $T_1$ of the first side portion 2a was 0.12 mm. The thickness $T_2$ of the second side portion 2b was 0.2 mm. The length of the first side portion 2a in the length direction of the base can was 54.7 mm. The length $L_3$ of the second side portion 2b in the length direction of the base can was 6 mm. The length $L_1$ of the junction 2c in the length direction of the base can was 4 mm.

«Comparative Example 1»

The intermediate product 8 obtained in the step (1) of Example 1 was used as a battery can for comparison. The inner diameter $D_2$ of the second side portion 9b of the intermediate product 8 was 17.6 mm, and the inner diameter $D_1$ of the first side portion 9a was 17.76 mm.

[Evaluation Test]

For the battery cans of Example 1 and Comparative Example 1, the insertion of an electrode assembly into the battery can was checked while varying the diameter of the electrode assembly inserted into the battery can in the range from 17.55 to 17.75 mm. The diameter of the electrode assembly was adjusted by changing the thickness of the electrode plates.

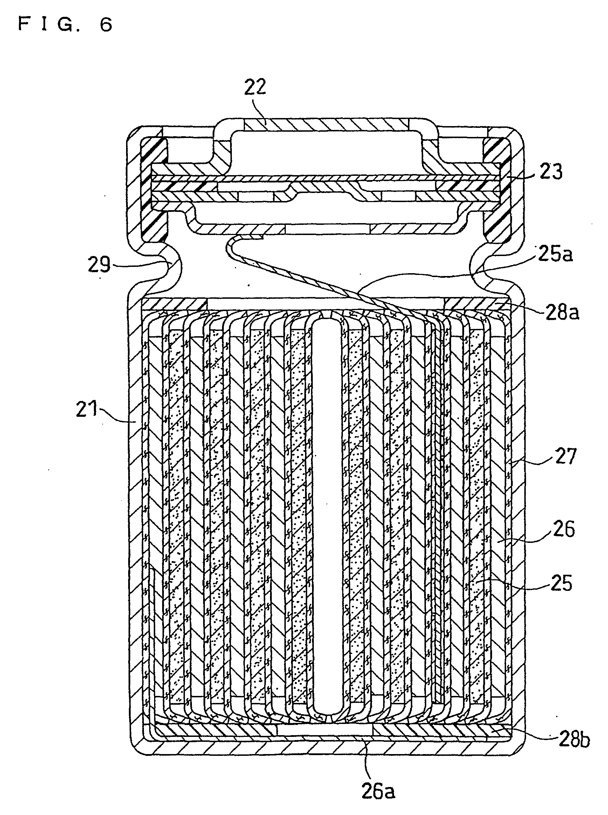

As the electrode assembly, an electrode assembly conventionally used for a lithium ion secondary battery was used. As shown in FIG. 6, the electrode assembly was produced by spirally winding a positive electrode plate 25 and a negative electrode plate 26 with a separator 27 interposed therebetween.

The positive electrode plate 25 was produced in the following procedure. More specifically, a positive electrode paste comprising a positive electrode active material, acetylene black, an aqueous dispersion of polytetrafluoroethylene and an aqueous solution of carboxymethyl cellulose was prepared. The obtained positive electrode paste was applied onto both surfaces of an aluminum foil, and then dried. Thereafter, the aluminum foil to which the paste has been applied was rolled and cut into a predetermined size to obtain the positive electrode plate 25. In this Example, lithium cobaltate was used as the positive electrode active material, but the present invention is not limited thereto.

The negative electrode plate 26 was produced in the following procedure. More specifically, a negative electrode paste comprising a negative electrode active material, an aqueous dispersion of styrene-butadiene rubber, and an aqueous solution of carboxymethyl cellulose was prepared. The obtained negative electrode paste was applied onto both surfaces of a copper foil, and then dried. Thereafter, the copper foil to which the paste has been applied was rolled and cut into a predetermined size to obtain the negative electrode plate 26. In this Example, artificial graphite derived from a coke was used as the negative electrode active material, but the present invention is not limited thereto.

Table 1 shows the result after the insertion capability of the electrode assembly into the produced battery cans was checked. In Table 1, the number "1" indicates that the electrode assembly could be inserted smoothly into the battery can. The number "2" indicates that the electrode assembly could be inserted into the battery can, but the electrode assembly suffered damage such as deformation or flaw. The number "3" indicates that the electrode assembly could not be inserted into the battery can.

[Table 1]

| | Diameter of electrode assembly (mm) | | | | |
|---|---|---|---|---|---|
| | 17.55 | 17.60 | 17.65 | 17.70 | 17.75 |
| Comparative Example 1 | 1 | 2 | 3 | 3 | 3 |
| Example 1 | 1 | 1 | 1 | 1 | 1 |

In the battery can of Example 1, even when the electrode assembly had a diameter exceeding 17.6 mm, the electrode assembly suffered no damage because the electrode assembly was inserted smoothly into the battery can. On the other hand, in the battery can of Comparative Example 1 which was the intermediate product of the present invention, when the electrode assembly having a diameter of 17.6 mm was used, the insertion capability decreased, causing damage to the electrode assembly. When the electrode assembly having a diameter of 17.65 mm or greater was used, the electrode assembly could not be inserted into the battery can. The foregoing indicates that an electrode assembly having a diameter larger than that of the conventional ones can be inserted into the battery can of the present invention. Consequently, it can be surmised that a battery having a capacity larger than that of conventional batteries can be obtained.

«Example 2»

Battery cans A to D were produced in the same manner as in Example 1, except that the value of $\{L_1/(T_2-T_1)\}$ was varied by changing the length $L_1$ of the junction extending from the first side portion side to the second side portion side as shown in Table 2.
[Table 2]

| | $L_1$ (mm) | $\{L_1/(T_2-T_1)\}$ |
|---|---|---|
| Battery can A | 2 | 25 |
| Battery can B | 4 | 50 |
| Battery can C | 8 | 100 |
| Battery can D | 10 | 125 |

Lithium ion secondary batteries as shown in FIG. 6 were produced using Battery cans A to D by sealing the opening portion of the can in the following procedure. As the electrode assembly housed in the battery can 21, an electrode assembly having a diameter of 17.75 mm was used. The positive electrode plate 25 and the sealing member 22 were electrically connected by a positive electrode lead 25a, and the negative electrode plate 26 and the inner bottom surface of the battery can 21 was electrically connected by a negative electrode lead 26a. Insulating rings 28a and 28b were placed on the top and bottom of the electrode assembly, respectively.
An electrolyte was injected into the battery can 21. As the electrolyte, an electrolyte prepared by dissolving $LiPF_6$ in a solvent mixture of ethylene carbonate and ethyl methyl carbonate was used. Thereafter, the opening portion of the battery can 21 was sealed using the sealing member 22 equipped with a safety valve and serving as the positive electrode terminal. When sealing the opening portion of the battery can 21, the opening portion of the battery can 21 was sealed by crimping the edge of the opening portion of the battery can 21 onto the periphery of the sealing member 22 with an insulating gasket 23 interposed therebetween. At this time, a groove was formed in the junction 2c of the cylindrical side portion 2 of the battery can 1 to obtain the battery can 21 having an annular groove 29 with a predetermined shape formed therein. In the upper portion of the annular groove 29, the insulating gasket 23 was disposed. The battery can 21 and the sealing member 22 were electrically insulated from each other by the insulating gasket 23.
In the case of using Battery cans B and C in which the value of $\{L_1/(T_2-T_1)\}$ was 50 to 100, in the battery production process described above, the annular groove having a predetermined shape was properly formed without causing damage to the electrode assembly. However, in the case of Battery can A in which the length $L_1$ of the junction extending from the first side portion side to the second side portion side was short, during the groove forming process of the junction to form the annular groove in the battery can, a stress occurred between the first side portion and the junction, so the annular groove having a predetermined shape was difficult to form in the battery can. In the case of Battery can D in which the length $L_1$ of the junction extending from the first side portion side to the second side portion side was long, in the formation of the annular aperture in the battery can, because the junction extended to the housing portion for the electrode assembly, the junction pressed the electrode assembly, which caused damage to the electrode assembly.

«Example 3»

Battery cans E to I were produced in the same manner as in Example 1, except that, in the step (2) in which the intermediate product was processed into the battery can, the value of $(L_3/L_2)$ was varied by changing the length $L_2$ of the convex portion of the expanding punch in the length direction of the base can as shown in Table 3. Then, the inner diameter $D_2$ of the second side portion of each battery can and the inner diameter $D_3$ of the bottom of the battery can were measured. The measurement result is shown in Table 3.

[Table 3]

|  | $L_2$ (mm) | $L_3/L_2$ | $D_2$ (mm) | $D_3$ (mm) |
|---|---|---|---|---|
| Battery can E | 0.12 | 0.02 | 17.70 | 18.00 |
| Battery can F | 0.3 | 0.05 | 17.76 | 18.00 |
| Battery can G | 1.2 | 0.2 | 17.76 | 18.00 |
| Battery can H | 2.4 | 0.4 | 17.76 | 18.00 |
| Battery can I | 3 | 0.5 | 17.76 | 18.05 |

When the expanding punch in which the value of $(L_3/L_2)$ was 0.05 to 0.4 was used in the process, Battery cans F to H having an intended inner diameter were obtained.

In Battery can E produced using the expanding punch in which the length $L_2$ of the convex portion in the length direction of the base can was short, when processing the intermediate product into the battery can in the step (2), a restoring force caused by the springback of the second side portion was exerted, and thus the inner diameter of the cylindrical side portion could not be made constant from the opening portion side to the bottom side. On the other hand, in Battery can I produced using the expanding punch in which the length $L_2$ of the convex portion in the length direction of the base can was long, the resistance force between the convex portion of the expanding punch and the cylindrical side portion of the battery can increased, so buckling occurred at the bottom side of the cylindrical side portion, and thus the inner diameter of the bottom of the battery can increased relative to an intended shape. Accordingly, a battery can having an intended inner diameter could not be obtained.

Industrial Applicability

The battery can of the present invention is particularly applicable as an outer casing for an alkaline dry battery, nickel-metal hydride storage battery, or non-aqueous electrolyte secondary battery as typified by lithium ion battery.

**Claims**

1. A battery can comprising a cylindrical side portion, a bottom and an opening portion,
   wherein said cylindrical side portion comprises a first side portion formed toward the side of said bottom and a second side portion formed toward the side of said opening portion,
   the thickness $T_1$ of said first side portion and the thickness $T_2$ of said second side portion satisfy a relational expression (1): $T_1 < T_2$, and
   the inner diameter of said cylindrical side portion is constant from the side of said opening portion to the side of said bottom.

2. The battery can in accordance with claim 1,
   wherein said cylindrical side portion further comprises a junction provided between said first side portion and said second side portion and having a thickness that increases gradually from the side of said first side portion to the side of said second side portion, and
   the length $L_1$ of said junction that extends from said first side portion side to said second side portion side, the

thickness $T_1$ of said first side portion, and the thickness $T_2$ of said second side portion satisfy a relational expression (2): $50 \leqq \{L_1/(T_2-T_1)\} \leqq 100$.

3. A method for manufacturing a battery can comprising the steps of:

(1) subjecting a base can comprising a bottomed cylindrical body to a drawing and ironing process in which said base can is passed successively through a plurality of molding dies with a pressure applied by a molding punch,
so as to obtain an intermediate product comprising a cylindrical side portion, a bottom and an opening portion, wherein said cylindrical side portion comprises a first side portion formed toward the side of said bottom and a second side portion formed toward the side of said opening portion,
the thickness $T_1$ of said first side portion and the thickness $T_2$ of said second side portion satisfy a relational expression (1): $T_1 < T_2$, and
the outer diameter of said cylindrical side portion is constant from the side of said opening portion to the side of said bottom; and
(2) after said step (1), inserting an expanding punch, which comprises an inserting portion having a diameter equal to the inner diameter of said second side portion, and a convex portion formed at the rear of said inserting portion and having a diameter equal to the inner diameter of said first side portion, into the opening portion of said intermediate product from the side of said inserting portion,
in order that said second side portion is pressed from the inside toward the outside by said convex portion so as to obtain a battery can processed such that the inner diameter of said cylindrical side portion is constant from the side of said opening portion to the side of said bottom.

4. The method for manufacturing a battery can in accordance with claim 3,
wherein the length $L_2$ of said convex portion in the length direction of said base can and the length $L_3$ of said second side portion in the length direction of said base can satisfy a relational expression (3): $0.05 \leqq \{L_3/L_2\} \leqq 0.4$.

FIG. 1

F I G .  2

F I G. 3

F I G. 4

FIG. 5

F I G. 6

## INTERNATIONAL SEARCH REPORT

International application No.

PCT/JP2006/313277

| A. CLASSIFICATION OF SUBJECT MATTER |
| --- |
| *H01M2/02*(2006.01)i |

According to International Patent Classification (IPC) or to both national classification and IPC

| B. FIELDS SEARCHED |
| --- |
| Minimum documentation searched (classification system followed by classification symbols)<br>H01M2/02 |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>A | JP 4-296444 A (Shin-Kobe Electric Machinery Co., Ltd.),<br>20 October, 1992 (20.10.92),<br>Full text<br>(Family: none) | 1,2<br>3,4 |
| X<br>A | JP 2004-241186 A (Ishizaki Press Ind. Co., Ltd.),<br>26 August, 2004 (26.08.04),<br>Par. Nos. [0039] to [0040]; Fig. 8<br>& US 2004/185337 A1 | 1<br>2-4 |
| X<br>A | JP 2005-190688 A (Sanyo Electric Co., Ltd.),<br>14 July, 2005 (14.07.05),<br>Full text<br>(Family: none) | 1<br>2-4 |

| ☒ Further documents are listed in the continuation of Box C. | ☐ See patent family annex. |
| --- | --- |

| | | |
| --- | --- | --- |
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search<br>26 September, 2006 (26.09.06) | Date of mailing of the international search report<br>03 October, 2006 (03.10.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/313277

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-216709 A  (Sanyo Electric Co., Ltd.), 02 August, 2002 (02.08.02), (Family: none) | 1-4 |
| A | JP 11-144690 A  (Matsushita Electric Industrial Co., Ltd.), 28 May, 1999 (28.05.99), & EP 944119 A1 | 1-4 |
| A | JP 5-89861 A  (Matsushita Electric Industrial Co., Ltd.), 09 April, 1993 (09.04.93), (Family: none) | 1-4 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5089861 A
- JP 2004241186 A